# EUROPEAN PATENT SPECIFICATION

(11) **EP 3 338 556 B1**
(45) Date of publication and mention of the grant of the patent: **15.04.2020**
(21) Application number: 17203192.4
(22) Date of filing: 23.11.2017
(51) Int. Cl.: A23C 9/154, A23C 3/05, A23G 9/14, A23C 23/00

(54) **METHOD FOR PRODUCING A KULFI MIX**
VERFAHREN ZUR HERSTELLUNG EINER KULFI MISCHUNG
METHODE DE PRODUCTION D'UN MIX POUR KULFI

(30) Priority: 21.12.2016 EP 16205799
(43) Date of publication of application: 27.06.2018
(73) Proprietor: Tetra Laval Holdings & Finance S.A., 1009 Pully (CH)
(72) Inventor: BRANDT IVERSEN, Leif, 9500 Hobro (DK)
(74) Representative: Tetra Pak - Patent Attorneys SE

(56) References cited:
- GB-A- 2 400 537
- RU-C1- 2 505 989
- US-A- 4 680 944
- US-A1- 2003 064 137
- US-A1- 2016 000 103
- RAJOR R B ET AL: "A new approach for the manufacture of kulfi", INDIAN DAIRYMAN, INDIAN DAIRY SCIENCE ASSOCIATION, BANGALORE, IN, vol. 43, no. 6, 1 January 1991 (1991-01-01), pages 256-259, XP009193505, ISSN: 0019-4603
- Kiran Nagajjanavar ET AL: "KULFI A TRADITIONAL AND NUTRITIONAL FROZEN DESSERT: A REVIEW", International Research Journal of Natural and Applied Sciences (IRJNAS), 31 July 2016 (2016-07-31), pages 79-88, XP055346387, Retrieved from the Internet: URL:https://www.aarf.asia/download.php?fil ename=../current/2016/Jul/gfHvj8NJ1mlWSRG. pdf&new= [retrieved on 2017-02-15]

## Description

### Technical Field

The invention relates to a method for producing Kulfi.

### Background Art

Kulfi is a frozen dairy-based dessert gaining popularity throughout the world. Having its origin in India, it shows some similarities with traditional western ice cream. However, due to its production method Kulfi differs from ice cream in taste as well as in density, why Kulfi therefore may be regarded as a distinct category of frozen dairy-based desserts.

The known method for producing Kulfi is a batch cooking process in which a mix (Kulfi mix) of milk and sugar, optionally flavored, is cooked so that water evaporates from the Kulfi mix, thereby increasing the solid content of the mix. During cooking, caramelization of the sugar will provide a distinct taste to the Kulfi mix. This distinct taste comes from in particular the chemical process called "Maillard reaction" that takes place during the cooking.

The Kulfi mix is subsequently frozen into the final Kulfi. Compared to production of ice cream, there is no whipping when producing Kulfi. In this context, a "Kulfi mix" is the mixture of food ingredients that, when processed and frozen in packages or in units, forms Kulfi. The terms "Kulfi mix" and "Kulfi" may be used interchangeably.

The above-described method is a very time and energy consuming process, as conventional open-air cooking is performed for increasing the thickness of the Kulfi mix, as well as for providing the characteristic caramelized, burned taste; a cooking time of up to 3 hours or more is common. Therefore, known methods are not very well suitable for industrial, large-scale applications. Some relevant prior art is reflected by US2016/000103A1 and by RAJOR R B ET AL: "A new approach for the manufacture of kulfi", INDIAN DAIRYMAN, JOURNAL OF THE INDIAN DAIRY SCIENCE ASSOCIATION, vol. 43, no. 6, 1 January 1991, pages 256-259.

### Summary

It is an object of the invention to at least partly overcome one or more of the above-identified limitations of the prior art. In particular, it is an object to provide a method for producing a Kulfi mix which can be made faster, with less energy consumption and either in a batch process or in a continuous production process.

To solve these objects a method for producing a Kulfi mix is provided. The method comprises mixing at least a liquid, milk powder and sugar to a blend of ingredients that has a first predetermined amount of solid content, and heating the blend of ingredients to a first predetermined temperature for initiating a Maillard reaction. The method also comprises adding liquid for cooling and thereby reducing the temperature of the blend of ingredients, to a second predetermined temperature for controlling the Maillard reaction, and adding liquid to the blend of ingredients in order to reduce its solid content to a second predetermined amount of solid content that is lower than the first predetermined amount of solid content, thus forming a Kulfi mix. The method may also comprise pasteurizing the Kulfi mix, either as a separate step or as part of heating the blend of ingredients for initiating a Maillard reaction.

The addition of liquid for cooling respectively reducing the solid content of the Kulfi mix may be done in one step of adding liquid, i.e. the added liquid may then both cool respectively reduce the solid content of the Kulfi mix. The adding of liquid may also be done in several steps.

The method is advantageous in that it is no longer required to use continuous cooking as a means for obtaining the desired taste and thickness of the Kulfi mix. Instead, the burned taste is provided by initiating the Maillard reaction for the blend of ingredients having a higher amount of solid content than required for the final Kulfi mix, and controlling the Maillard reaction by diluting the blend of ingredients with colder liquid such that the temperature of the blend of ingredients drops below the temperature at which the Maillard reaction takes place.

Hence, the Kulfi mix can be produced much faster, while still allowing for a controlled process. The processes may also be performed continuously, i.e. the method may be a method for continuously producing a Kulfi mix. A Kulfi mix production system is also disclosed. The system comprises i) a mixer arranged to mix at least a liquid, milk powder and sugar to a blend of ingredients that has a first predetermined amount of solid content, ii) a heater arranged to heat the blend of ingredients to a first predetermined temperature, for initiating a Maillard reaction, and iii) one or more liquid supplies arranged to add liquid to the blend of ingredients to thereby cool and reduce the temperature of the blend of ingredients, to a second predetermined temperature for controlling the Maillard reaction, and to reduce its solid content to a second predetermined amount of solid content that is lower than the first predetermined amount of solid content, thus forming a Kulfi mix. A pasteurizer may be arranged to pasteurize the Kulfi mix. Optionally or alternatively, the heater performs pasteurization.

Still other objectives, features, aspects and advantages of the invention will appear from the following detailed description as well as from the drawings. Also, each feature described and implemented for the Kulfi mix production system may be implemented for the method for producing the Kulfi mix, and vice versa.

### Brief Description of the Drawings

Embodiments of the invention will now be described, by way of example, with reference to the accompanying schematic drawings, in which
Fig. 1 is a schematic view of a system for producing a Kulfi mix,
Fig. 2 is a schematic view of a method for producing a Kulfi mix, and
Fig. 3 is a schematic view of another method for producing a Kulfi mix.

### Detailed description

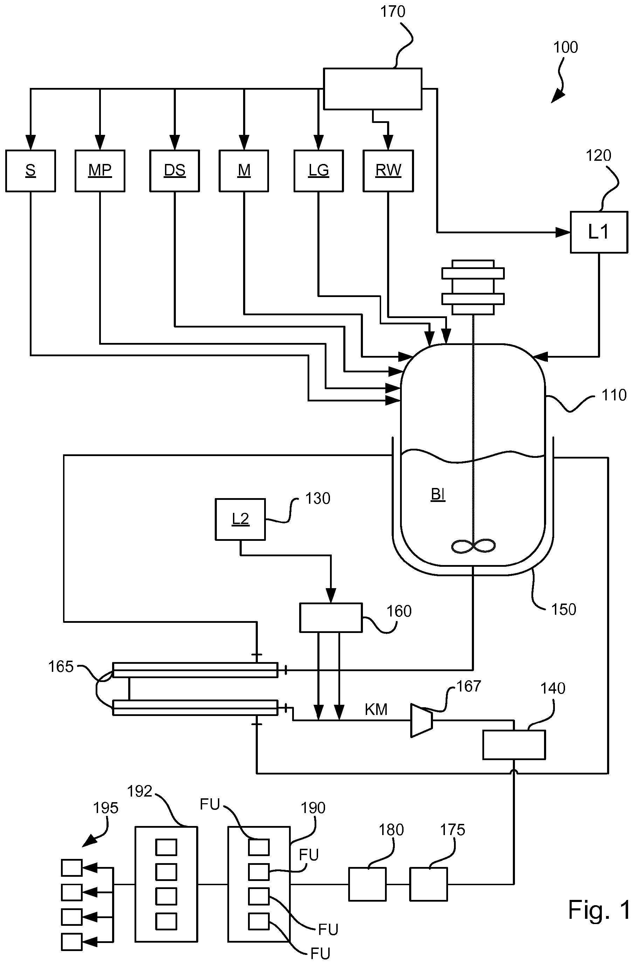

With reference to Fig. 1 a system 100 for producing a Kulfi mix is illustrated. The system 100 also comprises equipment for providing individual units of Kulfi from the Kulfi mix, as will be explained in the following.

The system 100 comprises a mixer 110, here in the form of a mixing vessel, arranged to mix a blend of ingredients BI. The blend of ingredients BI may be formed by adding solid content in form of sugar, milk powder, dry sugars, and minors (e.g. preservatives, color additives, flavor enhancers, etc.), to a liquid content in form of vegetable fat, cream, milk, water or a mix thereof. An optional liquid content in form of rework (re-circulated Kulfi mix) and/or liquid glucose may also be added to form the blend of ingredients BI. The relative amount of ingredients (the recipe) to be used depends on what taste and flavor is desired for a final Kulfi mix.

As will be understood, all parts of the ingredients must not be introduced in the mixer 110 to form the blend of ingredients BI. Instead, some parts, in particular some of the liquid parts, may be added later.

The sugar is provided by means of a sugar supply S, the milk powder is provided by means of a milk powder supply MP, the dry sugars is provided by means of a dry sugar supply DS, and the minors are provided by means of a minors supply M.

Any liquid rework is provided by means of a rework supply RW, the liquid glucose is provided by means a liquid glucose supply LG, while the liquid content in form of liquid vegetable fat, cream, milk, water or a combination thereof, indicted by reference L1, is provided by means of a liquid supply 120.

Each supply S, MP, DS, M, LG, RW, 120 is controlled by means of a controller 170 that is configured to control the supplies so that the resulting blend of ingredients BI inside the mixer 110 form a liquid that has a predetermined solid content. One or more of the ingredients may be supplied manually, i.e. without any control provided by the control unit 170. The solid content of the blend of ingredients BI is above the desired solid content of the final Kulfi mix, which normally is in the range from 38 wt% to 42 wt%. The solid content of the blend of ingredients BI inside the mixed may be above 48 wt%. However, even higher amounts of solid content of the blend of ingredients BI is possible, such as e.g. above 55 wt% or even above 60 wt%. Here, wt% refers to weight percentage, i.e. percentage by weight. The solid content of the blend of ingredients BI in the mixer 110 is referred to as a first predetermined amount TS1 of solid content.

Instead of measuring solid content in wt% it may be measured in vol% (volume percentage). The taste and texture of the final Kulfi mix will then be different from when measuring solid contents in wt%. The same measurement unit should of course be used for both the blend of ingredients BI and the final Kulfi mix.

Considering the high content of solids in the blend of ingredients BI inside the mixer 110, the blend of ingredients BI is a relatively viscous liquid, almost a "slurry".

The ingredients that form the Kulfi mix may be introduced into the mixer 110 by any suitable technique, including manually. The mixer 110 is typically a closed mixer. The system 100 comprises a heater 150, which in the shown example is formed together with the mixer 110. The heater 150 is arranged to increase the temperature of the blend of ingredients BI inside the mixer 110 so as to initiate a Maillard reaction to the blend of ingredients BI.

As the Maillard reaction normally starts at a temperature above 67°C, the heater 150 may e.g. be arranged to heat the blend of ingredients BI inside the mixer 110 to a temperature of approximately 80°C. Other temperatures are also possible as long as the temperature is above the temperature at which the Maillard reaction initiates. Hence, the heater 150 may heat the blend of ingredients BI until the temperature of blend of ingredients BI is in the range from 72°C to 100°C.

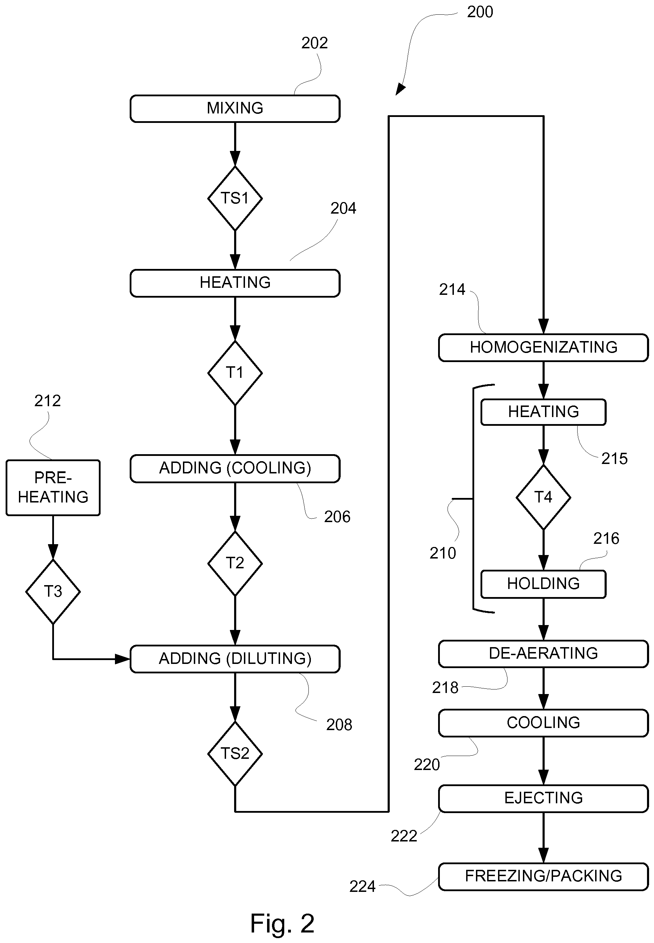

The controller 170 may be configured to control the addition of the various ingredients dynamically. For example, as will be explained further below with reference to Fig. 2, the controller 170 may provide a blend of ingredients BI having a solid content of above 60 wt%, and the heater 150 may be configured to heat the blend of ingredients BI to at least 80°C. The controller 170 may be configured to add additional liquid content L1, such as vegetable fat, cream and/or water from the supply 120 so that the temperature decreases to approximately 70°C, thus still allowing for the Maillard reaction to take place.

When the Maillard reaction has given the desired effect on the blend of ingredients BI, then the controller 170 controls adding additional amount of liquid content L1 from the liquid supply 120, to the blend of ingredients BI in the mixer 110 in order to reduce the temperature of the blend of ingredients BI to a temperature below the temperature at which a Maillard reaction takes place. For the values discussed above, a suitable temperature of the blend of ingredients BI is at this stage below 67°C, or even below 65°C. The longer time the Maillard reaction takes place, the more the taste of the Kulfi mix will be affected. The exact time the Maillard reaction shall take place and at what exact temperature may be empirically determined for obtaining a desired taste and texture of the Kulfi mix.

When liquid L1 is added from the liquid supply 120 then the solid content of the blend of ingredients BI is reduced to a second predetermined amount TS2 of solid content. TS2 is lower than the first predetermined amount TS1 of solid content and may represent the desired final content of solids for the Kulfi mix.

If the solid content of the blend of ingredients BI should still be above the desired solid content of the final Kulfi mix, then an additional liquid supply 130 may be provided in order to add liquid L2 to the blend of ingredients BI, to further reduce the solid content until the desired content is reached. The added liquid L2 may be cream, milk, water and/or a mixture thereof.

The second predetermined amount of solid content is equal to the desired solid content of the final Kulfi mix, thereby forming a Kulfi mix. The solid content of the blend of ingredients BI, with the addition of the liquid L1 and/or L2 may be in the range from 38 wt% to 42 wt%. This is the final content of solids on the Kulfi mix. The supply 130 of the liquid L2 may be connected to a pre-heater 160 for raising the temperature of the added liquid L2 to a desired temperature.

In addition to the mixer 110, the system 100 comprises a heat exchanger 165, a homogenizer 167, a pasteurizer 140, a de-aerator 175, a cooler 180, a Kulfi mix ejector 190, a freezer 192 and a packing station 195. These units are connected to each other by conventional piping. One or more pumps (not shown) are used for feeding product all the way from the mixer 100 to the packing station 195.

The heat exchanger 165 may be a plate heat exchanger that is provided for recovering some of the heat from the blend of ingredients BI exiting the mixer 110. The additional amount of liquid L2 added to the blend of ingredients BI downstream the mixer 110 may be added downstream the heat exchanger 165. The heat exchanger 165 may be adapted to transfer some of the recovered heat to heater 150.

As indicated, instead or in addition to adding the liquid L2 from the additional liquid supply 130 in order to obtain the desired solid content of the blend of ingredients BI, liquid L1 may be added from the liquid supply 120 to the mixer 110. Thus, liquid L1 from the supply 120 may be added both to stop the Maillard reaction by cooling the blend of ingredients BI, and to decrease the solid content of the blend of ingredients BI until it reaches a final solid content, thereby forming the final Kulfi mix KM.

Before entering the pasteurizer 140, the Kulfi mix KM may be fed through the homogenizer 167 that is homogenizing the Kulfi mix. The pasteurizer 140 is arranged to pasteurize the Kulfi mix KM. The pasteurizer 140 then kills or at least reduces microorganisms in the Kulfi mix KM to an extent where the number of viable pathogens in the Kulfi mix KM is so low that they are unlikely to cause disease, as long as the Kulfi is stored as prescribed and is consumed before its expiration date. The de-aerator 175 is optional, and may simulate open vat boiling of the Kulfi mix KM.

The pasteurizer 140 may e.g. be configured to heat the Kulfi mix KM to a temperature in the range from 80°C to 99°C, such as in the range from 83°C to 99°, or to a temperature of 98°C, and to keep this temperature sufficiently long for achieving pasteurization of the Kulfi mix. The Maillard reaction may again start when heating the Kulfi mix above the trigger temperature of approximately 67°C, and this should be taken into account when determining time and temperature for the Maillard reaction that takes place in the mixer 110.

Optionally, the homogenizer 167 is arranged after the pasteurizer 140, or the pasteurizer 140 is completely omitted.

When exiting the pasteurizer 140, the Kulfi mix KM is forwarded to a cooler 180 to decrease the temperature of the Kulfi mix KM. A suitable temperature of the Kulfi mix KM after passing through the cooler 180 is below 4°C to 15°C.

The ejector 190 distributes the Kulfi mix KM into individual forming units FU of Kulfi mix KM. These forming units FU are subsequently passed to a freezer 192 that freezes the forming units FU. The frozen forming units FU are thereafter introduced to a packing station 195 for allowing individual transportation and sales of frozen units of Kulfi mix. The packing station 195 may be a conventional wrapping machine, or may be a machine of the type that ejects the Kulfi mix into boxes that are sealed with e.g. a lid. The ejector 190 and the freezer 192 may also have the form of a combined ejector-freezer unit that continuously ejects Kulfi mix KM in freezed forming units FU, which thereafter are packed.

Now turning to Fig. 2, a more detailed description of a method 200 of producing a Kulfi mix KM will be provided. The method may be implemented by the system 100 described in connection with Fig. 1 and may incorporate some or all features of the system 100. Although the shown method 200 has several steps it should be realized that one or more steps may be omitted as long as the general concept of initiating the Maillard reaction for the blend of ingredients BI having a higher solid content than the solid content of the final Kulfi mix is achieved.

According to the method 200, a first step of mixing 202 at least liquid L1 and solid ingredients to form the blend of ingredients BI that has the first predetermined amount TS1 of solid content is performed. The first predetermined amount TS1 of solid content is, as described, above the desired solid content of the final Kulfi mix KM, i.e. it may be above 48 wt%.

Either performed in sequence or in parallel with the mixing 202, the method 200 performs heating 204 of the blend of ingredients BI to a first predetermined temperature T1 for initiating the Maillard reaction. The first predetermined temperature T1 may be in the range from 72 to 100°C, such as 80°C.

In a following step the method 200 performs adding 206 of liquid L1 for cooling and thereby reducing the temperature of the blend of ingredients BI, to a second predetermined temperature T2 for controlling the Maillard reaction. Controlling the Maillard reaction is typically performed such that the Maillard reaction is terminated, or at least greatly reduced. The second predetermined temperature T2 may be below 67°C, or may even be below 65°C.

In a subsequent step liquid is added 208 to the blend of ingredients BI in order to reduce its solid content (dilute) to a second predetermined amount TS2 of solid content that is lower than the first predetermined amount TS1 of solid content, thus forming a Kulfi mix KM. The liquid added in step 208 may be added from the liquid supply 120 (L1) or may be added from the additional liquid supply 130 (L2). If added from the additional liquid supply 130 the liquid L2 may be preheated 212 to a predetermined temperature T3 before being added 208 to the blend of ingredients BI. The steps of adding liquid 206, 208 may be performed as one step.

The second predetermined amount TS2 of solid content is in the range from 38wt% to 48 wt%, or may be in the range from 38 to 42 wt%.

The method 200 may also perform an optional step of homogenizing 214 the Kulfi mix KM prior to a step of pasteurizing 210 of the Kulfi mix KM.

Pasteurizing 210 the Kulfi mix KM may be performed by heating 215 the Kulfi mix KM to a predetermined temperature T4 in the range from 80 to 99°C, or in the range from 83 to 99°C, and holding 216 the Kulfi mix KM at the predetermined temperature T4 for a predetermined time period, until the desired heat treatment, i.e. pasteurization, is obtained.

Optionally, the method 200 comprises de-aerating 218 the Kulfi mix KM.

Once pasteurization 210 is performed, the method 200 continues by a step of cooling 220 the pasteurized Kulfi mix KM to a temperature below e.g. 8°C, and thereafter by a step of ejecting 222, also referred to as extruding, the Kulfi mix KM in predetermined amounts for forming units FU of Kulfi mix KM.

Next the method 200 performs a step of freezing 224 the units FU of Kulfi mix KM to form ready-to-eat Kulfi. Finally a step of packing 226 the units FU of Kulfi mix KM is performed, for allowing individual distribution of frozen units of Kulfi mix KM.

It should be noted that the last step of freezing and packing 224 could be performed in various orders; either freezing preceded packing, or packing preceded freezing. The cooling, ejecting and freezing may be done in one continuous step.

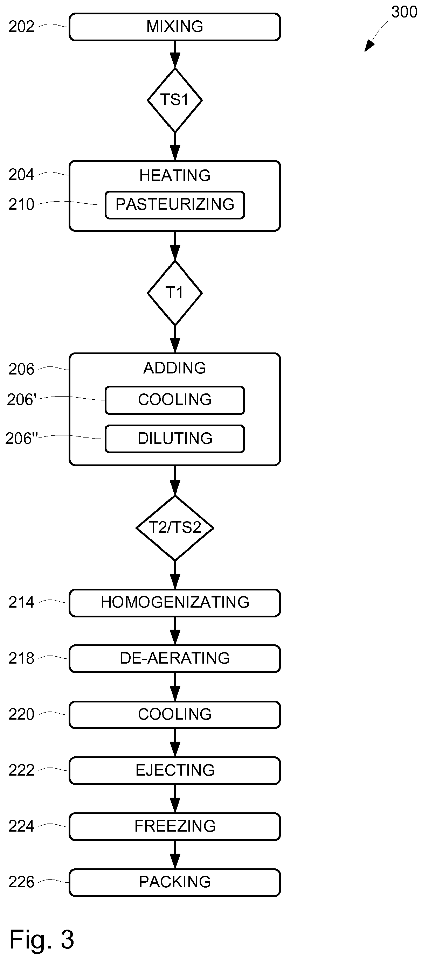

With reference to Fig. 3 an alternative method 300 of producing Kulfi mix is illustrated. The method includes a first step of mixing 202 at least liquid, milk powder and sugar S to a blend of ingredients BI that has a first predetermined amount TS1 of solid content. Next the blend of ingredients BI is heated 204 to a first predetermined temperature T1, for initiating the Maillard reaction. The heating 204 may reach a temperature that accomplishes pasteurization 210 of the blend of ingredients BI. Next liquid is added 206 to the blend of ingredients BI, which accomplishes cooling 206' and thereby a reduction of the temperature of the blend of ingredients BI, to a second predetermined temperature T2 for controlling the Maillard reaction. The adding 206 of liquid may also accomplish a reduction 206" (dilution) of the solid content of the blend of ingredients BI, to a second predetermined amount TS2 of solid content that is lower than the first predetermined amount TS1 of solid content.

Liquid that is added 206 after pasteurization is typically a liquid that has been treated, e.g. by heat, UV-light or by any other suitable technique, such that any microorganisms in the liquid are killed or at least reduces to an extent where the number of viable pathogens is so low that they are unlikely to cause disease when the final Kulfi mix is consumed. This assumes that the Kulfi mix has been stored as prescribed and is consumed before its expiration date.

After the adding of liquid 206, the Kulfi mix may be homogenized 214, deaerated 218, cooled 220, ejected 222, freezed 224 and packed 226 just as described in connection with Figs 1 and 2.

Basically, the difference between the methods of Figs 2 and 3 lies in that the Fig. 3 method also pasteurizes the blend of ingredients BI during the heating for initiating the Maillard reaction. The heating may then be done in a pasteurizer, and addition of liquid may be done in-line after the pasteurizer or in a balance tank that is arranged after the pasteurizer.

Pasteurization temperature and time may be per se be selected according to known techniques and principles. However, the heating for initiating the Maillard reaction and the period of time for when this reaction shall take place is typically empirically determined for obtaining by the desired taste of the Kulfi mix.

The principles of the two described methods share the same general concept and may be used in combination. For example, the pasteurization in the method of Fig. 2 also provides some initialization of the Maillard reaction. However, the pasteurization may be done so quick so that it does not affect the taste.

## Claims

1. A method (200, 300) for producing a Kulfi mix, comprising
mixing (202) at least a liquid (L1), milk powder (MP) and sugar (S) to a blend of ingredients (BI) that has a first predetermined amount (TS1) of solid content,
heating (204) the blend of ingredients (BI) to a first predetermined temperature (T1), for initiating a Maillard reaction,
adding (206, 208) liquid (L1) to the blend of ingredients (BI) to
- cool and thereby reduce the temperature of the blend of ingredients (BI), to a second predetermined temperature (T2) for controlling the Maillard reaction, and
- reduce its solid content to a second predetermined amount (TS2) of solid content that is lower than the first predetermined amount (TS1) of solid content, thus forming a Kulfi mix (KM).

2. The method according to claim 1, wherein the first predetermined amount (TS1) of solid content is above 48 wt%.

3. The method according to claim 1 or 2, wherein the second predetermined amount (TS2) of solid content is in the range from 38 wt% to 48 wt%.

4. The method according to any one of the preceding claims, wherein the first predetermined temperature (T1) is in the range from 72°C to 100°C.

5. The method according to any one of the preceding claims, wherein the second predetermined temperature (T2) is below 67°C.

6. The method according to any one of the preceding claims, wherein the adding (208) of liquid (L2) to the blend of ingredients (BI) comprises pre-heating (212) the liquid (L2) to a third predetermined temperature (T3).

7. The method according to any one of the preceding claims, comprising homogenizing (214) the Kulfi mix (KM).

8. The method according to any one of the preceding claims, wherein the pasteurizing (210) of the Kulfi mix comprises heating (215) the Kulfi mix (KM) to a temperature (T4) of 83°C to 99°C, and keeping (216) the Kulfi mix (KM) at this temperature (T4) for a period of time of 600 sec - 3600 sec.

9. The method according to any one of the preceding claims, comprising de-aerating (218) the Kulfi mix (KM)

10. The method according to any one of the preceding claims, comprising ejecting (222) the Kulfi mix (KM) in predetermined amounts for forming units (FU) of Kulfi mix,
freezing (224) the units (FU) of Kulfi mix, and
packing (224) the units (FU) of Kulfi mix, for allowing individual distribution of frozen units of Kulfi mix.

## Patentansprüche

1. Verfahren (200, 300) zur Herstellung einer Kulfi-Mischung, umfassend:
Mischen (202) von wenigstens einer Flüssigkeit (L1),
Milchpulver (MP) und Zucker (S) zu einem Gemisch von Inhaltsstoffen (BI), das eine erste vorbestimmte Menge (TS1) an Feststoffgehalt aufweist,
Erhitzen (204) des Gemischs von Inhaltsstoffen (BI) auf eine erste vorbestimmte Temperatur (T1), um eine Maillard-Reaktion auszulösen,
Zugeben (206, 208) von Flüssigkeit (L1) zu dem Gemisch von Inhaltsstoffen (BI), um
- zu kühlen und dadurch die Temperatur des Gemischs von Inhaltsstoffen (BI) auf eine zweite vorbestimmte Temperatur (T2) zu verringern, um die Maillard-Reaktion zu steuern, und
- seinen Feststoffgehalt auf eine zweite vorbestimmte Menge (TS2) an Feststoffgehalt zu verringern, die kleiner als die erste vorbestimmte Menge (TS1) an Feststoffgehalt ist, um so eine Kulfi-Mischung (KM) zu bilden.

2. Verfahren gemäß Anspruch 1, wobei die erste vorbestimmte Menge (TS1) an Feststoffgehalt mehr als 48 Gew.-% beträgt.

3. Verfahren gemäß Anspruch 1 oder 2, wobei die zweite vorbestimmte Menge (TS2) an Feststoffgehalt in dem Bereich von 38 Gew.-% bis 48 Gew.-% liegt.

4. Verfahren gemäß einem der vorstehenden Ansprüche, wobei die erste vorbestimmte Temperatur (T1) in dem Bereich von 72 °C bis 100 °C liegt.

5. Verfahren gemäß einem der vorstehenden Ansprüche, wobei die zweite vorbestimmte Temperatur (T2) niedriger als 67 °C ist.

6. Verfahren gemäß einem der vorstehenden Ansprüche, wobei das Zugeben (208) von Flüssigkeit (L2) zu dem Gemisch von Inhaltsstoffen (BI) Vorwärmen (212) der Flüssigkeit (L2) auf eine dritte vorbestimmte Temperatur (T3) umfasst.

7. Verfahren gemäß einem der vorstehenden Ansprüche, umfassend Homogenisieren (214) der Kulfi-Mischung (KM).

8. Verfahren gemäß einem der vorstehenden Ansprüche, wobei das Pasteurisieren (210) der Kulfi-Mischung Erhitzen (215) der Kulfi-Mischung (KM) auf eine Temperatur (T4) von 83 °C bis 99 °C und Halten (216) der Kulfi-Mischung (KM) bei dieser Temperatur (T4) für einen Zeitraum von 600 s bis 3600 s umfasst.

9. Verfahren gemäß einem der vorstehenden Ansprüche, umfassend Entlüften (218) der Kulfi-Mischung (KM).

10. Verfahren gemäß einem der vorstehenden Ansprüche, umfassend Auswerfen (222) der Kulfi-Mischung (KM) in vorbestimmten Mengen, um Einheiten (FU) von Kulfi-Mischung zu bilden,
Einfrieren (224) der Einheiten (FU) von Kulfi-Mischung und
Verpacken (224) der Einheiten (FU) von Kulfi-Mischung, um einzelnes Verteilen von gefrorenen Einheiten von Kulfi-Mischung zu ermöglichen.

## Revendications

1. Méthode (200, 300) de production d'une préparation pour Kulfi, comprenant
le mélange (202) d'au moins un liquide (L1), de poudre de lait (MP) et de sucre (S) jusqu'à un mélange des ingrédients (BI) qui possède une première quantité prédéterminée (TS1) de teneur en matière sèche,
le chauffage (204) du mélange des ingrédients (BI) jusqu'à une première température prédéterminée (T1), pour l'initiation d'une réaction de Maillard,
l'addition (206, 208) de liquide (L1) au mélange des ingrédients (BI) afin
- de refroidir et ainsi réduire la température du mélange des ingrédients (BI) jusqu'à une deuxième température prédéterminée (T2) afin de contrôler la réaction de Maillard, et
- de réduire sa teneur en matière sèche jusqu'à une deuxième quantité prédéterminée (TS2) de teneur en matière sèche qui est inférieure à la première quantité prédéterminée (TS1) de teneur en matière sèche, formant ainsi une préparation pour Kulfi (KM).

2. Méthode selon la revendication 1, dans laquelle la première quantité prédéterminée (TS1) de teneur en matière sèche est supérieure à 48% en poids.

3. Méthode selon la revendication 1 ou 2, dans laquelle la deuxième quantité prédéterminée (TS2) de teneur en matière sèche se trouve dans la plage allant de 38% en poids à 48% en poids.

4. Méthode selon l'une quelconque des revendications précédentes, dans laquelle la première température prédéterminée (T1) se trouve dans la plage allant de 72°C à 100°C.

5. Méthode selon l'une quelconque des revendications précédentes, dans laquelle la deuxième température prédéterminée (T2) est inférieure à 67°C.

6. Méthode selon l'une quelconque des revendications précédentes, dans laquelle l'addition (208) de liquide (L2) au mélange des ingrédients (BI) comprend le préchauffage (212) du liquide (L2) jusqu'à une troisième température prédéterminée (T3).

7. Méthode selon l'une quelconque des revendications précédentes, comprenant l'homogénéisation (214) de la préparation pour Kulfi (KM).

8. Méthode selon l'une quelconque des revendications précédentes, dans laquelle la pasteurisation (210) de la préparation pour Kulfi comprend le chauffage (215) de la préparation pour Kulfi (KM) jusqu'à une température (T4) allant de 83°C à 99°C, et le maintien (216) de la préparation pour Kulfi (KM) à cette température (T4) pendant une période de temps de 600 s - 3600 s.

9. Méthode selon l'une quelconque des revendications précédentes, comprenant la désaération (218) de la préparation pour Kulfi (KM).

10. Méthode selon l'une quelconque des revendications précédentes, comprenant
l'éjection (222) de la préparation pour Kulfi (KM) selon des quantités prédéterminées pour la formation d'unités (FU) de préparation pour Kulfi,
la congélation (224) des unités (FU) de préparation pour Kulfi, et
l'emballage (224) des unités (FU) de préparation pour Kulfi, afin de permettre la distribution individuelle d'unités congelées de préparation pour Kulfi.
